# EUROPÄISCHE PATENTANMELDUNG

(11) **EP 1 256 755 A1**
(43) Veröffentlichungstag der Anmeldung: **13.11.2002**
(21) Anmeldenummer: 01111535.9
(22) Anmeldetag: 11.05.2001
(51) Int. Cl.: F16L 55/05

(54) **Vorrichtung zum Reduzieren von Druckpulsationen in Hydraulikleitungen**

(71) Anmelder: Dobson Industries Corp., Wickhams Cay, Road Town, Tortola (VG)
(72) Erfinder: Kurr, Klaus-Jürgen, Dr.-Ing, 64832 Babenhausen-Langstadt (DE); Kaufmann, Veit, 68163 Mannheim (DE)
(74) Vertreter: Troesch Scheidegger Werner AG

(57) **Zusammenfassung**

Eine Vorrichtung zum Reduzieren von in einem Hydrauliksystem oder einem pneumatischen System, insbesondere durch Pumpen oder Stellglieder verursachte Pulsationen weist ein Ausgleichsvolumen mit einer im Volumen angeordneten und das Volumen abschliessenden verschieblichen Wandung bzw. Membran (39) auf. Diese Membran ist auf einer Seite mit den Pulsationen beaufschlagt und an der entgegengesetzten Seite mit einem Gegendruck, welcher wenigstens nahezu dem mittleren Druck im Hydraulik- oder Pneumatiksystem entspricht. Dies erfolgt, indem das an der entgegengesetzten Seite der Wandung angeordnete Druckausgleichsvolumen (43) über eine Ausgleichsleitung (51) mit dem Hydraulik- oder Pneumatiksystem verbunden ist. Weiter vorgesehen ist ein wenigstens teilweise Gas oder Dampf enthaltendes Volumen bzw. elastisches Polster (45, 47) bzw. genannt weiche Feder, welches bzw. welche mit dem Hydraulik- oder Pneumatiksystem mindestens wirkverbunden ist. Das Polster bzw. Volumen bzw. die weiche Feder (45, 47) wird mindestens teilweise durch eine Metallmembran oder Metallfeder gebildet.

## Beschreibung

Die vorliegende Erfindung betrifft eine Vorrichtung zum Reduzieren von in einem Hydrauliksystem oder einem pneumatischen System, insbesondere durch Pumpen oder Stellglieder verursachte Pulsationen nach dem Oberbegriff von Anspruch 1 sowie verschiedene Anwendungen der Vorrichtung.

Die Kinematik der in Oelhydraulik-Kreisläufen meist eingesetzten hydrostatischen oder anderen Pumpen sowie die Betätigung von Armaturen, Ventilen und Stelleinrichtungen führt zu Druckschwingungen, die wesentliche Ursache unerwünschter Geräusche in hydraulischen Systemen sind. Weitere Folgen sind u.a. eine erhöhte festigkeitsmässige Beanspruchung der Rohrleitungen, deren Befestigungen sowie der angeschlossenen Verbraucher.

So erfolgt beispielsweise auch die Versorgung der Servolenkung und anderer hydraulischer Verbraucher in Fahrzeugen, wie insbesondere Kraftfahrzeugen, über hydraulische Verdrängereinheiten. Diese erzeugen aufgrund des diskontinuierlichen Fördervorganges Druck- und Volumenstrompulsationen, die sich über das Hydraulikmedium im Leitungssystem fortpflanzen. Speziell bei Servolenkungen sind diese Pulsationen unerwünscht. Weitere Anregungen können über die Fahrbahn und das Rad in das Lenkgetriebe, beispielsweise in Form von Druckstössen, eingeleitet werden, was Auswirkungen auf die Fahrsicherheit hat.

Eine Vielzahl passiver und aktiver Dämpfer werden zur Minderung dieser Pulsationen eingesetzt. Seit langem werden zur Minderung von Pulsationen passive Elemente, wie etwa Membranspeicher, eingesetzt. Aufgrund des grossen Gasvolumens besteht bei diesen allerdings das Problem, dass beim Auftreten eines grossen Pulses dieser vom Membranspeicher "geschluckt" wird und ein Weiterfliessen des Hydraulikmediums kurzfristig unterbrochen wird.

Eine weitere Lösung stellen sogenannte Dehnschläuche dar, wie beispielsweise in der DE-33 39 876 vorgeschlagen.

Eine wiederum weitere Lösung wird in der GB-2 054 041 vorgeschlagen, in welcher ein sogenannter Kammerresonator für die Aufnahme von Pulsationen vorgeschlagen wird.

Aus der FR-834 316 ist eine Vorrichtung bekannt, um in Flüssigkeitsdruckleitungen auftretenden Unterdruck und starken Überdruck aufzufangen bzw. auszugleichen.

Eine ähnliche Anordnung beschreibt die US-4 088 154, in welcher wiederum entlang einer Flüssigkeitsleitung eine längs ausgedehnte und in Kommunikation mit dieser Leitung stehende Ausgleichskammer vorgesehen ist, welche eine elastische Wandung aufweist.

Beide vorab genannten Vorrichtungen erscheinen eher ungeeignet im Zusammenhang mit der Kompensation von Druckpulsationen in Hydraulikleitungen, da sie einerseits zu träge sind und anderseits einen relativ komplizierten Aufbau mit sich bringen.

In der DE-25 49 367 wird eine Vorrichtung zur Entlastung einer Rohrleitung für Flüssigkeiten von Druckstössen beschrieben. Die beschriebene Vorrichtung ist nur geeignet für das Ausgleichen von erhöhten Druckstössen und nicht zum Ausgleichen von Unterdruck.

In der EP-A-0 633 400, der EP-0 679 832 sowie der WO01/18443 schliesslich werden adaptive, hydropneumatische Pulsationsdämpfer beschrieben, welche für pulsationsbehaftete Hydrauliksysteme mit stark wechselndem Betriebsdruck vorgeschlagen werden, und welche eine hydraulisch steife Kopplung zwischen einer Druckquelle und einem Verbraucher eines Hydrauliksystems ermöglicht. Dabei wird vorgeschlagen, eine Dämpfungsmembran des adaptiven Pulsationsdämpfers an der dem zu dämpfenden Hydraulikmedium entgegengesetzten Oberfläche mit demselben Druck zu beaufschlagen, welcher im Hydraulikmedium selbst vorherrscht. Zusätzlich werden die Pulsationen gedämpft, indem mit der entgegengesetzten Oberfläche der Dämpfungsmembran mindestens wirkverbunden weiter ein Volumen-elastisches Gaspolster bzw. eine Gasfeder vorgesehen ist, welche ebenfalls vom Druck des Hydrauliksystems beaufschlagt ist. Der Druckausgleich resp. die Druckbeaufschlagung des Gaspolsters mit dem Druck des Hydrauliksystems erfolgt über mindestens eine Druckausgleichsleitung, welche das Hydrauliksystem mit der entgegensetzten Oberfläche der Dämpfungsmembran und/oder mit dem Volumen-elastischen Gaspolster verbindet.

Im Betrieb dieser Pulsationsdämpfer konnte allerdings über eine sehr lange Betriebsdauer eine Reduzierung des Gasvorspanndruckes festgestellt werden. Dies kann zu einer Veränderung des Uebertragungsverhaltens führen. Speziell bei hydraulischen Bremsen ist eine konstante Dämpfung während der gesamten Lebensdauer eines Fahrzeuges unbedingt erforderlich.

Es ist daher eine Aufgabe der vorliegenden Erfindung, eine Vorrichtung zum Reduzieren von Druckpulsationen und von Druckstössen in Hydrauliksystemen, wie insbesondere Hydraulikleitungen, vorzuschlagen, welche ein relativ kleines Einbauvolumen beansprucht, einfach und kostengünstig in der Herstellung ist, und zudem eine Dämpfung über einen breiten Frequenzbereich gewährleistet und welche Vorrichtung auch bei langer Betriebsdauer eine wenigstens nahezu konstante Dämpfung garantiert.

Erfindungsgemäss wird die genannte Aufgabe mittels einer Vorrichtung nach Anspruch 1 gelöst.

Analog den Pulsationsdämpfern, beschrieben in der EP-0 633 400, der EP-0 679 832 wie auch in der WO01/18443 weist die erfindungsgemässe Vorrichtung ein Ausgleichsvolumen auf, welches vom Hydrauliksystem durchflossen wird, und in welchem Ausgleichsvolumen eine verschiebliche Wandung bzw. eine Membran angeordnet ist, welche Wandung bzw. Membran an der einen Seite mit den Pulsationen des Hydrauliksystems beaufschlagt wird und an der entgegengesetzten Seite einen Gegendruck zum Hydrauliksystem aufweist, welcher wenigstens nahezu dem mittleren Druck im Hyrauliksystem entspricht. Um sicher zu stellen, dass der Gegendruck immer in etwa dem Druck im Hydrauliksystem entspricht, wird in allen Druckschriften vorgeschlagen, das Hydrauliksystem über eine Ausgleichsleitung mit der Gegenseite zu verbinden, wobei entweder in dieser Leitung eine Drossel vorgesehen ist, um das Uebertragen von Pulsationen auf die Gegenseite der Wandung bzw. Membran zu verhindern, oder aber das Volumen an der Gegenseite der Wandung bzw. Membran ist über die Ausgleichsleitung mit dem Hydrauliksystem bzw. der Hydraulikleitung in Fortpflanzungsrichtung der Pulsationen nachgeschaltet zum Ausgleichsvolumen verbunden.

Speziell die letztgenannte Ausführungsvariante, wie aus der WO01/184 bekannt, hat den Vorteil, dass in der Ausgleichsleitung auf das Anordnen einer Drossel verzichtet werden kann. Bezüglich der spezifischen Ausgestaltung dieser Pulsationsdämpfer sei auf die drei Druckschriften EP 0 633 400, EP 0 679 832 sowie WO01/18443 verwiesen, deren Konstruktionen und Auslegungen in Kombination mit der hier vorgeschlagenen, erfindungsgemässen Neuerung ebenfalls Bestandteil der vorliegenden Erfindung sind.

Erfindungsgemäss wird nun vorgeschlagen, dass das in den drei genannten Druckschriften ebenfalls beanspruchte adaptierbare Volumen-elastische Gas bzw. Dampfpolster, auch bezeichnet als weiche Feder, mindestens teilweise eine Metallmembran bzw. eine Metallfeder aufweist. Mit anderen Worten weist die, das Volumen-elastische Gas bzw. Dampfpolster abschliessende Kammerwandung bzw. die Gasfeder auch genannt weiche Feder wenigstens teilweise eine Metallmembran oder eine Metallfeder auf.

Vorzugsweise wird die Kammerwandung bzw. Gasfeder mindestens teilweise durch einen zylinderartigen, elastischen Metallbalg gebildet, welcher in Zylinderlängsrichtung elastisch federnd ausgebildet ist.

Wie in den drei genannten Druckschriften dargelegt, kann das mindestens teilweise Gas- oder Dampf-enthaltende Volumen-elastische Polster bzw. die sogenannte weiche Feder direkt an der entgegengesetzten Seite bzw. Oberfläche der verschieblichen Wandung oder Membran angeordnet sein, oder beabstandet, so dass zwischen Membran und Volumenelastischem Gas bzw. Dampfpolster oder der weichen Feder Hydraulikmedium des Hydrauliksystems angeordnet ist, welches über die genannte Ausgleichsleitung mit der Hydraulikleitung verbunden ist.

Weiter ist es möglich, dass das Innere des mindestens teilweise Gas- oder Dampf-enthaltende Volumen-elastischen Polsters bzw. der weichen Feder über eine Leitung, beispielsweise enthaltend ein verschliessbares Ventil, mit dem Bereich ausserhalb des Pulsationsdämpfers kommuniziert, um, je nach Anforderungen, den Druck innerhalb des Polsters bzw. der weichen Feder einstellen oder verändern zu können.

Im weiteren ist es möglich, das innere Volumen des Gaspolsters bzw. der weichen Feder gänzlich mit einem Gas bzw. mit Dampf auszufüllen, oder aber wenigstens teilweise mit einer vorzugsweise, wenigstens nahezu inkompressiblen Flüssigkeit zu füllen, um die Kompressibilität des Volumens zu verringern und damit die Ansprechzeit bei der Auslenkung des Metallbalges zu erhöhen, um so eine schneller wirksame Pulsationsdämpfung zu ermöglichen. Speziell bei sogenanntem Lenkungsüberholen sowie zur Verringerung des Kompressionsweges (Auslenkung) hat es sich gezeigt, dass bei ganzheitlich mit Gas gefüllten Volumen-elastischen Polstern bzw. der weichen Feder die Auslenkbarkeit des Metallbalges zu träge ist, womit die Pulsationsdämpfung ungenügend ist.

Es hat sich nun gezeigt, dass bei Verwendung einer Metallmembran bzw. Metallfeder oder des vorzugsweise vorgeschlagenen Metallbalges die Pulsationsdämpfung der erfindungsgemäss vorgeschlagenen Vorrichtung auch bei langer Betriebsdauer konstant bleibt, d.h. dass kein Abfall des Gasdruckes und somit keine Veränderung des Uebertragungsverhaltens festgestellt werden konnte. Es ist daher anzunehmen, dass bei der in den drei vorab genannten Druckschriften vorgeschlagenen Elastomer-Membranwandungen für das Volumen-elastische Polster eine wenigstens geringe Durchlässigkeit für das Gas besteht, wodurch Gas aus dem Inneren des Volumen-elastischen Polsters in das Hydraulikmedium diffundieren kann und damit die Gasvorspannung reduziert wird, was zu einer Veränderung der Uebertragungsfunktion führt. Dieser Effekt wird bei Verwendung von Metallmembranen bzw. Metallfedern oder des vorzugsweise vorgeschlagenen Metallbalges nicht festgestellt. Diese Erkenntnis legt den Schluss nahe, dass die bis anhin im Zusammenhang mit dem Volumen-elastischen Gaspolster verwendeten Elastomer bzw. Gummimaterialien mindestens eine geringe Permeabilität für Gasmoleküle aufweisen, was zu einer Druckabnahme im Gaspolster führt.

Die Erfindung wird nun anschliessend beispielsweise und unter Bezug auf die beigefügten Figuren näher erläutert.

Dabei zeigen:
- Fig. 1: schematisch dargestellt im Schnitt eine Ausführungsvariante eines erfindungsgemässen passiven Pulsationsdämpfung,
- Fig. 2: schematisch in Perspektive eine erfindungsgemässe, als Balg ausgebildete, Metallkammer für die Bildung eines Gaspolsters,
- Fig. 3: im Schnitt eine weitere Ausführungsvariante eines erfindungsgemäss ausgebildeten Pulsationsdämpfers, und
- Fig. 4: im Schnitt einen Teilbereich einer weiteren Ausführungsvariante eines erfindungsgemäss ausgebildeten Pulsationsdämpfers.

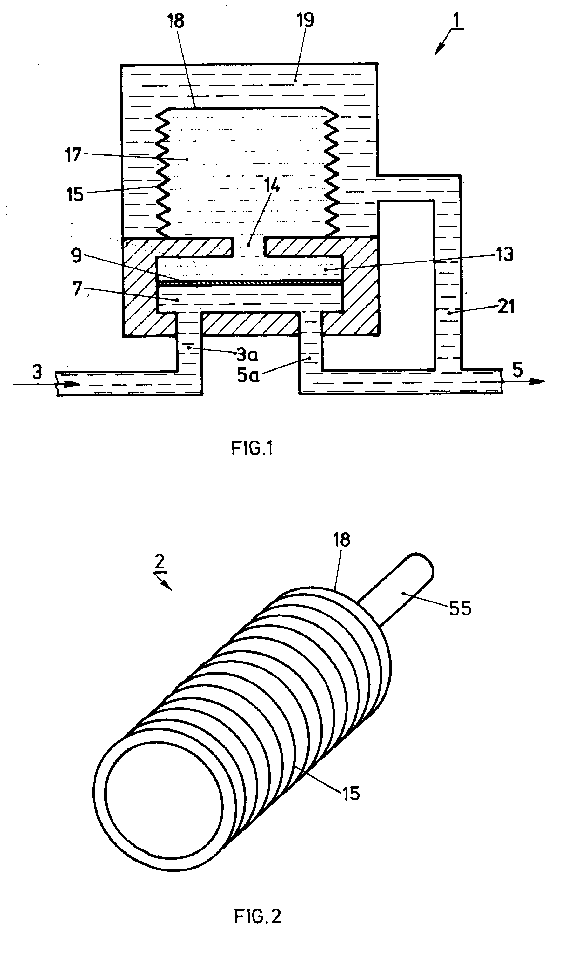

In Fig. 1 ist vereinfacht schematisch und im Querschnitt ein erfindungsgemässer passiver Pulsationsdämpfer 1 dargestellt, beispielsweise geeignet für den Einbau in ein Hydraulikleitungssystem einer Servolenkung eines Fahrzeuges, wie insbesondere eines Kraftfahrzeuges. Der erfindungsgemässe Pulsationsdämpfer ist gemäss Fig. 1 dabei derart in eine Hydraulikleitung bzw. zwischen einem Zufluss 3 und einem Abfluss 5 oder im Abzweig einer Hydraulikleitung angeschlossen, dass die Leitung über Anschlussleitungen 3a bzw. 5a mit dem Pulsationsdämpfer verbunden ist. Diese Anschlussleitungen 3a bzw. 5a münden in eine Ausgleichskammer 7, welche mittig durch eine Membran 9, wie beispielsweise eine Elastomer- oder Metallmembran oder eine verschiebliche Wandung von einem Druckausgleichsvolumen 13 getrennt ist.

Über Öffnungen 14 ist das Druckausgleichsvolumen 13 mit einem Gasvolumen bzw. Gaspolster 17 innerhalb einer Speichermembran 15 verbunden. Gasvolumen 17 und Speichermembran 15 bilden das eingangs erwähnte Volumen-elastische Gaspolster bzw. eine sogenannte Gasfeder oder weiche Feder.

Die Speichermembran 15 ist aussen beaufschlagt durch ein Hydraulikausgleichs- bzw. Entlastungsvolumen 19, welches über eine Druckausgleichsleitung mit der Abflussleitung 5 verbunden ist. Dadurch wird sichergestellt, dass im Hydraulikdruckausgleichsvolumen 19 weitgehendst derselbe mittlere Druck vorliegt wie in den Leitungen 3 und 5.

Durch diese Auslegung des Pulsationsdämpfers ergibt sich eine sogenannte adaptive bzw. selbsteinstellende Entlastung, wodurch der Wechselanteil des Druckes im mit Medium gefüllten Hydraulikdruckausgleichs- bzw. Entlastungsvolumen 19 durch das Gaspolster 17 eliminiert oder gemindert wird und nur der statische Anteil des Druckes auf der Seite der Membran bzw. verschieblichen Wandung wirkt, die dem Druckausgleichsvolumen 13 zugewandt ist. Erhöht sich beispielsweise der statische Druck im Hydrauliksystem, so wirkt diese Druckerhöhung auf beiden Seiten der Membran bzw. verschieblichen Wandung 9 gleichermassen. In der Ausgleichskammer 7 geschieht dies durch die direkte Verbindung zum Hydrauliksystem, und im Entlastungsvolumen 19 geschieht dies durch die Komprimierung des Gaspolsters 17, welches Entlastungsvolumen über die Ausgleichsleitung 21 mit dem Hydrauliksystem verbunden ist. Somit wird die Membran 9 vom statischen Anteil des Druckes entlastet.

Wie in der WO01/18443 vorgeschlagen, weist die in Fig. 1 dargestellte Vorrichtung zur Pulsationsdämpfung eine Ausgleichsleitung 21 auf, welche in Pulsations-Fortpflanzungsrichtung der Ausgleichskammer 7 nachgeschaltet eine Verbindung zwischen der Hydraulikleitung 5 und dem Hydraulkdruckausgleichs- bzw. Entlastungsvolumen 19 herstellt. Der grosse Vorteil dieser Ausführung im Vergleich zu derjenigen beansprucht in der EP-0 633 400 und EP-0 679 832 liegt darin, dass in der Ausgleichsleitung 21 keine Drossel anzuordnen ist.

Trotz Weglassens einer Drossel ist aber der Ausgleich von statischen Druckänderungen gegeben, und da die Pulsationen vor der Abzweigung der Ausgleichsleitung 21 in der Ausgleichskammer 7 mindestens teilweise geglättet werden, können diese auch nicht auf die Rückseite der Membran bzw. verschieblichen Wandung geführt werden. Dies bekanntlich deshalb, da die Funktionsweise dieses Pulsationsdämpfers 1 darin besteht, dass eine in die Zufuhrleitung 3 sich fortpflanzende Pulsation über den Zuleitungsabschnitt 3a in das Ausgleichsvolumen 7 gelangt. Durch die Pulsation wird die verschiebliche Wandung oder Membran 9 gegen das darüberliegende Druckausgleichsvolumen 13 ausgelenkt, wodurch der Puls weitgehendst absorbiert wird. Somit verlässt das Hydraulikmedium bzw. das Hydrauliköl das Ausgleichsvolumen über das Verbindungsstück 5a zur Abflussleitung 5 weitgehendst pulsationsfrei.

Erfindungswesentlich ist nun, dass die Speichermembran 15 bzw. die Wandung des Gasvolumens bzw. Gaspolsters 17 aus einer Metallfolie bzw. Metallmembran gebildet wird, und nicht wie in den drei vorab beschriebenen Druckschriften aus einem Elastomermaterial bzw. einem polymeren Gummimaterial besteht. Vorzugsweise wird diese Wandung bzw. Speichermembran 15 durch einen zylinderartigen Metallbalg gebildet, welcher in Zylinderlängsrichtung flexibel auslenkbar ist.

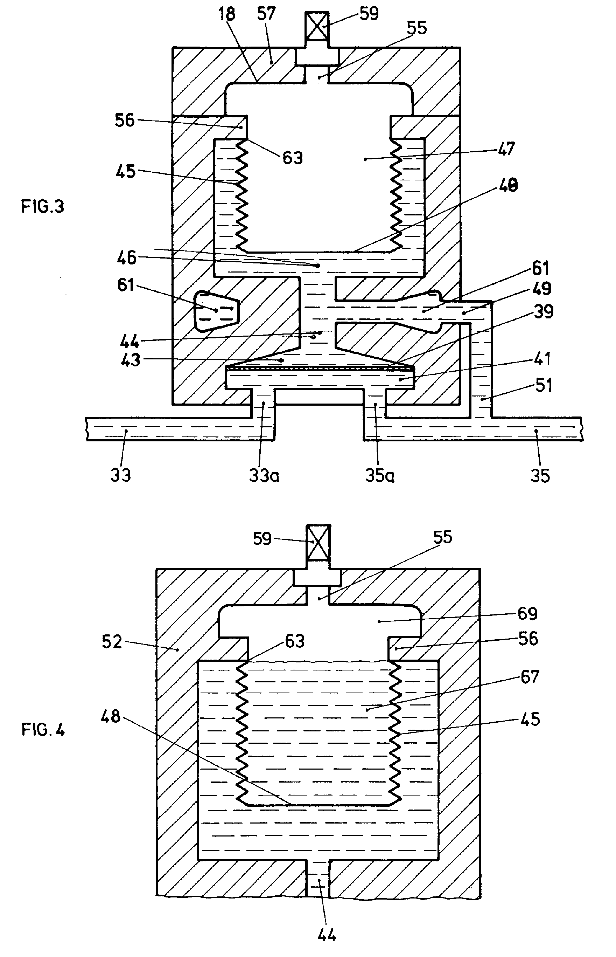

Fig. 2 zeigt entsprechend schematisch in Perspektive eine Metallkammer 2, zur Bildung des Gaspolsters 17, dargestellt in Fig. 1. Dabei wird die Wandung bzw. Speichermembran 15 durch einen zylinderartigen Metallbalg gebildet, welcher in Längsrichtung elastisch dehnbar bzw. komprimierbar ausgebildet ist. Der zylinderartige Metallbalg kann aus einem dünnen rostfreien Stahlblech gefertigt werden, oder aus irgendeinem anderen, geeigneten Metallmaterial, welches über eine ausreichende Beständigkeit gegenüber den üblicherweise verwendeten Hydraulikölen aufweist. An der unten sichtbaren Stirnseite kann der Metallbalg entweder offen ausgebildet sein, wie in der Ausführung gemäss Fig. 1, oder aber verschlossen, wie insbesondere verwendet in den nachfolgend beschriebenen Fig. 3 und 4. Am oberen Ende des Balges ist ebenfalls eine Abdeckung bzw. ein Verschluss 18 vorgesehen, welcher, wie insbesondere in bezug auf die nachfolgend beschriebenen Fig. 3 und 4, mittig eine Anschlussöffnung bzw. einen Anschluss 55 aufweisen kann, um eine Verbindung zwischen dem Innenraum des Gaspolsters und der Umgebung des Pulsationsdämpfers herzustellen.

In Fig. 3 ist im Schnitt eine weitere Ausführungsvariante eines erfindungsgemässen Pulsationsdämpfers dargestellt, wobei im Unterschied zu Fig. 1 die dämpfende Gasfeder bzw. das Volumen-elastische Gaspolster nicht unmittelbar an der Rückseite der Membran bzw. verschieblichen Wandung angeordnet ist. Der in Fig. 3 dargestellte Pulsationsdämpfer weist wiederum eine Zuflussleitung 33 auf, welche über Anschlussleitungen 33a mit einem Hydraulikausgleichsvolumen 41 verbunden ist, in welchem die verschiebliche Wandung bzw. Membran 39 angeordnet ist. Ueber Anschlussleitung 35a verlässt das weitgehendst pulsationsfreie Hydraulikmedium das Ausgleichsvolumen 41 und gelangt in die Abflussleitung 35. Das dem Hydraulikausgleichsvolumen 41 gegenüberliegende Hydraulikdruckausgleichsvolumen 43 wird nun nicht durch ein Gas- bzw. Dampfpolster gebildet, sondern in diesem Volumen findet sich ebenfalls Hydraulikmedium. Ueber eine Oeffnung 44 ist dieses Druckausgleichsvolumen 43 mit einem Oelvolumen 49 verbunden, welches über die Druckausgleichsleitung 51 mit der Abflussleitung 35 im Hydrauliksystem kommuniziert.

Für die eigentliche Aufnahme der Druckpulsationen ist wiederum ein Volumen-elastisches Gaspolster bzw. eine weiche Feder vorgesehen, welches bzw. welche durch ein Gasvolumen 47 und die Speichermembran 45 gebildet wird.

Das Funktionsprinzip des Dämpfers in Fig. 3 ist ähnlich demjenigen in Fig. 1, indem über die Zuflussleitung 33 das Hydraulikmedium in das Ausgleichsvolumen 41 weitgehendst senkrecht auf die Membran 39 gelangt, welche eine sogenannte Schwingmembran sein kann. Ueber den Auslass 35 verlässt das Hydraulikmedium das Ausgleichsvolumen 41 und gelangt in die Abflussleitung 35. Das Ausgleichsvolumen 41 wird also vom kompleten Volumenstrom durchflossen, wodurch die axial eingespannte Schwingmembran 39 Volumen- bzw. Druckpulsationen ausgleichen kann, indem sie das freigebende Volumen auf ihrer Gegenseite verdrängt und dies direkt auf das Volumen-elastische Gaspolster mit dem leichter komprimierbaren Gasmedium innerhalb des Gasvolumens 47 überträgt. Wesentlich ist hierbei die direkte Koppelung des Druckausgleichsvolumens 43 mit dem Gaspolster bzw. der Gasfeder über eine gerade und kurz auszuführende Leitung. Die Membran 39 wird durch den Druckpuls ausgelenkt und erzeugt einen Volumenstrompuls, welcher durch die Oeffnung 44 nach oben in Richtung der Oeffnung 46 und des Oelvolumens 49 strömt. Der Volumenstrompuls pflanzt sich nicht im Oelvolumen 49 fort, sondern er wird von der weichen Gasfeder bzw. dem Gaspolster aufgenommen. Die Aufnahme des Volumens durch die Gasfeder verhindert, dass das Hydraulikmedium komprimiert wird und ein neuer Druckpuls entsteht, der sich über die Ausgleichsleitung 51 und die Abflussleitung 35 im nachgeschalteten System ausbreitet.

Der Gasspeicher bzw. das Gasvolumen 47 kann über eine Bohrung 55 gefüllt, d.h. auf einen bestimmten Druck vorgespannt und mittels des Deckels 57 abgedichtet werden. Die Bohrung 55 weist im übrigen ein verschliessbares Ventil 59 auf, zum Oeffnen bzw. Schliessen der Bohrung bzw. der nach aussen führenden Leitung 55. Der Druckausgleich, der nötig ist um die Schwingmembran 39 bei jedem statischen Systemdruck in der entlasteten Mittellage zu halten, wird über die Ausgleichsleitung 51 realisiert. Ueber die Parameter Gasvolumen, Gasvorspannungsdruck, Schwingmembrandicke bzw. Membrancharakteristik und Einbaustelle des Pulsationsdämpfers in einem Hydraulikkreislauf kann nun auf die jeweiligen Anforderungen im Hydrauliksystem bezüglich der Pulsationsdämpfung eingegangen werden.

Erfindungsgemäss wesentlich wiederum bei der Ausführungsvariante gemäss Fig. 3 ist, dass die Wandung bzw. Schwingmembran 45 des Gaspolsters bzw. der weichen Feder durch eine Metallmembran bzw., wie in Fig. 3 dargestellt, durch einen zylinderartigen Metallbalg gebildet wird, welcher frontseitig durch eine Abdeckung 49 verschlossen ist. Dieser Metallbalg 45 kann beispielsweise über eine Schweissnaht 63 an einem ringartigen Vorsprung 56 der Gehäusewandung 52 befestigt sein, welcher Vorsprung 56 mittels einer Abdeckung 18 zur Bildung des geschlossenen Gasvolumens 47 verschlossen ist. Auch die beiden endständigen, den Balg verschliessenden, Abdeckungen 18 bzw. 48 sind vorzugsweise aus Metall gefertigt, um eine Migration von Gasmolekülen aus dem Gasvolumen 47 in das das Gaspolster bzw. die Gasfeder umgebende Hydraulikmedium zu verhindern.

Die Ausführungsvariante gemäss Fig. 3 weist weiter einen sogenannten Ringraum 61 auf, welcher durch mehrere mit der mittigen Oeffnung 44 kommunizierende Kanäle verbunden ist. Der Vorteil dieses Ringraumes liegt darin, dass bei übermässigen Pulsationen, welche durch die Membran 39 auf das dahinter angeordnete Oelvolumen übertragen werden, nebst der Dämpfung durch das Gaspolster bzw. die Gasfeder durch eine allseitige "ringförmige" Fortpflanzung eine zusätzliche Dämpfung erfolgen kann. Durch den angeordneten Ringraum 61 kann sichergestellt werden, dass über die Membran übertragene Pulsationen nicht unmittelbar über die Rückführleitung 51 in die Abflussleitung übertragen werden, und somit der eigentliche Pulsationseffekt nur zu einem Teil durch die Gasfeder bzw. das Gaspolster aufgefangen wird.

Fig. 4 schliesslich zeigt einen Ausschnitt eines weiteren erfindungsgemäss ausgebildeten Pulsationsdämpfers, welcher konstruktiv weitgehendst dem Pulsationsdämpfer von Fig. 3 entspricht.

Im Unterschied zu Fig. 3 ist das innere Volumen der weichen Feder bzw. des sogenannten "Gaspolsters" nicht vollständig mit Gas gefüllt, sondern teilweise mit einer vorzugsweise, wenigstens nahezu inkompressiblen Flüssigkeit. Bezogen auf Fig. 4 ist der Bereich 67 innerhalb der Kammerwandung 45 bzw. der balgartigen Membran 45 mit einem Hydrauliköl gefüllt, und lediglich der über dem Oel liegende Raum 69 bildet das Volumen-elastische Gaspolster bzw. Gasvolumen 69.

Im Betrieb hat es sich gezeigt, dass bei gewissen Bedingungen durch das relativ grosse Gasvolumen 47 gemäss Fig. 3 die Dämpfung des kompressiblen Gasvolumens bzw. der Schwingmembran 45 zu träge ist, beispielsweise im Falle von sogenanntem "Lenkungsüberholen" beim Steuern eines Fahrzeuges. Deshalb wird entsprechend gemäss Fig. 4 vorgeschlagen, das Innere der Speichermembran zu einem Teil mit einer Flüssigkeit, wie beispielsweise einem Hydrauliköl, zu füllen, wodurch das Gaspolster ein wesentlich geringeres Gasvolumen 69 aufweist, welches eine wesentlich schnellere Ansprechung auf kurze Pulsationsfrequenzen ermöglicht. Ausserdem verringert sich hierdurch der erforderliche Weg, den die Metallmembran zurücklegen muss.

Wesentlich in Fig. 4 ist aber, dass wiederum die Wandung 45 durch einen Metallbalg gebildet wird, und nicht wie in früheren Druckschriften vorgeschlagen, durch eine Elastomermembran bzw. eine Gummimembran.

Selbstverständlich ist es möglich, die in den Fig. 1 - 4 dargestellten erfindungsgemässen Pulsationsdämpfungsvorrichtungen zu modifizieren bzw. durch weitere Elemente zu ergänzen, wobei hierzu auf die drei Druckschriften EP-0 633 400, EP-0 679 832 sowie WO01/18443 verwiesen wird. Mit anderen Worten ist es möglich, weitere Federanordnungen vorzusehen, wie beispielsweise Tellerfedern im Bereich der Membran bzw. flexible Wandung, oder aber es ist möglich, durch zusätzliche aktive Pulsationsdämpfung auf spezifische Anforderungen bei der Pulsationsdämpfung einzugehen. Auch bei der Materialwahl der Membran bzw. verschieblichen Wandung sei auf die genannten Druckschriften verwiesen, indem sowohl Metallmembrane, Elastomer-Membrane, federgelagerte steife Wandungen etc. verwendet werden können.

Wiederum kann es wesentlich sein, dass im Bereich der Membran eine Anschlagfläche vorgesehen ist, um die Auslenkung der Membran bzw. verschieblichen Wandung zu begrenzen, um bei auftretenden starken Pulsationen eine Instabilität des Hydrauliksystems zu verhindern.

Auch die Ausgestaltung des Gaspolsters bzw. der Gasfeder kann verschiedenartig sein, indem wie vorgeschlagen eine balgartige Speichermembran 45 vorzusehen ist, oder aber auch federgelagerte Metallmembrane, welche eine Vergrösserung bzw. Komprimierung des Gasvolumens innerhalb des Gaspolsters ermöglichen. Schlussendlich ist es auch möglich im oder am Gaspolster bzw. der Gasfeder zusätzlich mechanische Elemente vorzusehen, welche direkt an der Schwingmembran angreifen und somit eine reduzierte Komprimierung des Gasvolumens bzw. Ausdehnung des Gasvolumens ergeben.

Die erfindungsgemäss definierte Vorrichtung bzw. der Dämpfer kann in irgendwelchen Hydrauliksystemen oder pneumatischen Systemen verwendet werden, in denen Stellglieder oder Pumpen Pulsationen verursachen. Nebst hydraulischen Systemen, wie beispielsweise Servolenkungsanlagen, Niveauausgleichssysteme, etc. sind auch pneumatische Systeme zu erwähnen, wie beispielsweise Klimaanlagen in Kraftfahrzeugen.

## Patentansprüche

1. Vorrichtung zum Reduzieren von in einem Hydrauliksystem oder einem pneumatischen System, insbesondere durch Pumpen oder Stellglieder verursachte Pulsationen, aufweisend ein Ausgleichsvolumen mit einer im Volumen angeordneten und das Volumen abschliessenden verschieblichen Wandung bzw. Membran (9, 39), welche auf einer Seite mit den Pulsationen beaufschlagt ist und an der entgegengesetzten Seite mit einem Gegendruck beaufschlagt ist, welcher wenigstens nahezu dem mittleren Druck im Hydraulik- oder Pneumatiksystem entspricht, indem das an der entgegengesetzten Seite der Wandung angeordnete Druckausgleichsvolumen (13, 43) über eine Ausgleichsleitung (21, 51) mit dem Hydraulik- oder Pneumatiksystem verbunden ist, und mit einem wenigstens teilweise Gas- oder Dampf-enthaltenden Volumen-elastischen Polster bzw. Volumen (15, 17; 45, 47; 65, 67, 69) bzw. mit einer sogenannten weichen Feder, welches bzw. welche mit dem Hydraulik- oder Pneumatiksystem mindestens wirkverbunden ist, **dadurch gekennzeichnet, dass** das die Wandung (15, 45) des Polsters bzw. Volumens bzw. der weichen Feder mindestens teilweise durch eine Metallmembran oder eine Metallfeder gebildet wird.

2. Vorrichtung nach Anspruch 1, **dadurch gekennzeichnet, dass** die entgegengesetzte Seite bzw. Oberfläche der Wandung bzw. der Membran mit dem mindestens teilweise Gas- oder Dampf-enthaltenden Volumen-elastischen Polster bzw. Volumen bzw. der weichen Feder mindestens wirkverbunden ist, für eine, mindestens teilweise selbsteinstellende Entlastung der verschieblichen Wandung bzw. Membran.

3. Vorrichtung nach einem der Ansprüche 1 oder 2, **dadurch gekennzeichnet, dass** die Wandung des Volumen-elastischen Polsters, Volumens oder der weichen Feder mindestens teilweise aus einem zylinderartigen Metallbalg (15 45) besteht.

4. Vorrichtung nach einem der Ansprüche 1 - 3, **dadurch gekennzeichnet, dass** die Membran bzw. verschiebliche Wandung (9, 39) auf der entgegengesetzten Seite vom mindestens teilweise Gas- bzw. Dampf-enthaltenden Polster, Volumen oder der weichen Feder (17, 47) beaufschlagt ist.

5. Vorrichtung nach einem der Ansprüche 1 - 3, **dadurch gekennzeichnet, dass** das mindestens teilweise Gas- oder Dampf-enthaltende Polster, Volumen oder die weiche Feder (17, 47) beabstandet von der Membran bzw. verschieblichen Wandung (9, 39) angeordnet ist.

6. Vorrichtung nach einem der Ansprüche 1 bis 5, **dadurch gekennzeichnet, dass** die mit dem Druckausgleichsvolumen (13, 43) verbundene Ausgleichsleitung (21, 51) in Fortpflanzungsrichtung der Pulsation in bezug auf das Ausgleichsvolumen (7, 41) nachgeschaltet in das Hydraulikoder Pneumatiksystem bzw. in die Hydraulik- oder Pneumatikleitung (5, 35) mündet.

7. Vorrichtung nach einem der Ansprüche 1 - 6, **dadurch gekennzeichnet, dass** zwischen Membran und mindestens teilweise Gas- oder Dampf-enthaltende Polster bzw. Volumen oder der weichen Feder das mit dem Hydraulik- oder Pneumatiksystem verbundene Druckausgleichsvolumen (13, 43) mit Hydraulikmedium gefüllt ist und dass im Bereich der entgegengesetzten Seite der Wandung bzw. Membran (9, 39) ein sogenannter wenigstens nahezu kreisrunder Ringraum (61) angeordnet ist, welcher über radial verlaufende Leitungen mit dem an der entgegengesetzten Seite der Wandung oder Membran angeordnet Druckausgleichsvolumen (43) verbunden ist.

8. Vorrichtung nach einem der Ansprüche 1 - 7, **dadurch gekennzeichnet, dass** die Wandung (15, 45) des mindestens teilweise mit Gas oder Dampf gefüllten Gasvolumens bzw. Polsters (17, 47, 69) aus einem zylinderartigen, in Längsrichtung flexiblen Metallbalg gebildet wird, welcher frontseitig durch eine Abdeckung (48) verschlossen ist und am entgegengesetzten Ende eine Abdeckung (18) aufweist, welche eine mit dem Bereich ausserhalb des Pulsationsdämpfers kommunizierende Leitung (55) aufweist, welche vorzugsweise ein wieder verschliessbares Ventil (59) aufweist.

9. Vorrichtung nach einem der Ansprüche 1 - 8, **dadurch gekennzeichnet, dass** die Wandung (15, 45) des mindestens teilweise Dampf- oder Gas-enthaltenden Gasvolumens (17, 47, 49) einen zylinderartigen, in Längsrichtung flexiblen Metallbalg aufweist, welcher an seinem einen Ende an einem ringartigen Kragen (56) angeschweisst oder anderweitig befestigt ist.

10. Vorrichtung nach einem der Ansprüche 1 - 9, **dadurch gekennzeichnet, dass** das mindestens teilweise Gas oder Dampf enthaltende adaptierbare Volumen, die weiche Feder oder das elastische Polster teilweise mit einer vorzugsweise wenigstens nahezu inkompressiblen Flüssigkeit gefüllt ist.

11. Vorrichtung nach einem der Ansprüche 1 - 10, **dadurch gekennzeichnet, dass** das mindestens teilweise Gas oder Dampf enthaltende adaptierbare Volumen, die weiche Feder oder das elastische Polster teilweise mit Hydraulikmedium gefüllt ist.

12. Vorrichtung nach einem der Ansprüche 1 - 11, **dadurch gekennzeichnet, dass** die Eingangsleitung(-en)und Ausgangsleitung(-en) (3a, 5a; 33a, 35) zum bzw. vom Ausgleichsvolumen (11, 41) im wesentlichen senkrecht zur Membranebene bzw. der Ebene der verschieblichen Wandung (9, 39) angeordnet sind, damit das in das Ausgleichsvolumen einströmende Hydraulik- oder Pneumatikmedium im wesentlichen senkrecht auf die Membran bzw. verschiebliche Wandung auftrifft.

13. Verwendung der Vorrichtung nach einem der Ansprüche 1 - 12, zur Dämpfung von Druckschwingungen in servohydraulischen Lenksystemen von Kraftfahrzeugen.

14. Verwendung der Vorrichtung nach einem der Ansprüche 1 - 12, zur Dämpfung von Druckschwingungen in Kraftfahrzeug-Hydrauliksystemen, wie beispielsweise aktive Fahrwerke, Niveauausgleich, etc.

15. Verwendung der Vorrichtung nach einem der Ansprüche 1 - 12, zur Dämpfung von Druckschwingungen in Kraftfahrzeugen oder stationären oder mobilen Hydrauliksystemen.

16. Verwendung der Vorrichtung nach einem der Ansprüche 1 - 12, zur Dämpfung von Druckschwingungen in pneumatischen Systemen, wie stationäre, mobile oder Kraftfahrzeug-Systeme, wie beispielsweise Kraftfahrzeugheizungsanlagen/Klimaanlagen.

17. Kraftfahrzeughydrauliksystem, wie aktives Fahrwerk, Niveauausgleich, servohydraulisches Lenksystem, etc. mit einer Vorrichtung nach einem der Ansprüche 1 - 12, Hydrauliksystem nach Anspruch 17, **dadurch gekennzeichnet, dass** die Vorrichtung direkt integral in eine Leitung des Hydrauliksystems eingebaut ist.

18. Hydrauliksystem nach Anspruch 17, **dadurch gekennzeichnet, dass** der Pulsationsdämpfer in einer Abzweigung der Hydraulikleitung des Systems angeordnet ist.
